# EUROPEAN PATENT APPLICATION

(11) **EP 1 424 844 A1**
(43) Date of publication of application: **02.06.2004**
(21) Application number: 02026249.9
(22) Date of filing: 26.11.2002
(51) Int. Cl.: H04M 3/51, H04M 3/493, G10L 15/18

(54) **Human fallback method and system for interactive voice response systems**

(71) Applicant: Swisscom Fixnet AG, 3050 Bern (CH)
(72) Inventor: Van Kommer, Robert, 1752 Villars-sur-Glâne (CH); Von Niederhaeusern, Hans, 3074 Muri b. Bern (CH)
(74) Representative: Saam, Christophe

(57) **Abstract**

Method for determining when a human operator should make an intrusion in an incoming communication between a caller (1) and an interactive voice response system (34). The decision to make an intrusion depends on a plurality of parameters, including the communication cost.

The speech recognition system uses a two-pass method; subsequently recognized speech elements are used for forcing the grammar used by the speech recognition module in a second pass.

Advantage: does not disadvantage remote users.

## Description

The present invention concerns a method and a system used for example in call centers for determining when an incoming communication should be passed from an interactive voice response (IVR) system to a human operated terminal.

Interactive voice response systems are already used in automated call center systems. However, given today's performance of speech recognition methods, automated systems often give access to a human operator as a fallback. The purpose is to avoid a user becoming trapped in an automated system without succeeding in getting his/her answer or task done. In many call center systems, the quality of service prevails over the cost savings allowed by automated systems.

Interactive voice response systems are already known in which a human operator supersedes the automated dialogue performed by the IVR when needed. However, the caller does not notice that a human operator has been involved in the dialogue. This system is sometimes called "invisible operator". As all dialogue interactions must be supervised by a human operator, cost savings are only marginal.

Other systems are known in which, during the automated dialogue, the caller may request the dialogue to be passed over to a human operator. Those systems are sometimes referred to as "human fallback solutions". The drawback of those systems is that most callers feel more confident with human operators than with IVR systems and therefore immediately request the communication to be passed over to a human operator. The cost savings realized with those systems are thus minor.

Other systems are known in which the decision to pass an incoming communication from an IVR over to a human operated terminal is automatically taken by the IVR; the caller has no possibility of requesting such a direct connection. In many systems, the decision is based on a single parameter, usually on the duration of the communication. In this case, human operators immediately barge in on the communication to assist the caller when the duration of the communication exceeds a given threshold.

Although those systems do allow for a substantial cost saving by requiring all callers to spend a predetermined amount of time communicating with an IVR before being given the right to speak with a human operator, it has been observed by the inventors that many callers are still unhappy with this solution. In particular, callers calling from a remote place or from a mobile terminal often complain about the high communication costs occurred by the unfructuous initial dialogue with the IVR.

One aim of the invention is to provide an improved method and system for determining when an incoming communication should be passed from an interactive voice response system over to a human operated terminal. Another aim of the invention is to provide a method and a system that reduces the average communication cost for the user without increasing the human costs incurred by the call center manager.

Another aim of the invention is to improve the recognition rate of the IVR system before and even after the communication is passed over to a human operator.

In accordance with one embodiment of the present invention, a method for determining when an incoming communication should be passed from an interactive voice response system over to a human operated terminal is provided in which the decision to make an intrusion depends on the cost of the incoming communication.

The system of the invention thus suggests or decides to connect the caller with a human operator as soon as the communication cost exceeds a predefined threshold.

In a preferred embodiment, the decision to pass the communication over to a human terminal depends on or can be triggered by supplementary parameters, the communication cost being only one of those parameters.

According to another independent aspect of the invention, the speech recognition method used by the IVR system is a multi-pass one. This means that when a portion of a first dialogue interaction - for example an answer to a very open question, including a plurality of slots - has been reliably recognized during a subsequent dialogue interaction - for example when the caller repeats or spells a word, or when one word has been recognized or corrected by the human operator - the recognition of the first interaction is repeated, the recognized speech portion being used in this second pass to force the grammar used for the recognition, and thus improves the recognition of other portions of the interaction.

### Brief description of the drawings

The invention will be described with reference to the following drawings wherein:
Fig. 1 shows a schematized representation of a possible automated communication system according to the invention.
Figure 2 shows an example of a list of incoming communications with a score indicating the need for human processing of each call, as it may be displayed to a human operator in the call center.
Figure 3 shows an example of dialogue displayed to a human operator of the call center.
Figure 4 shows a second example of dialogue displayed to a human operator of the call center.

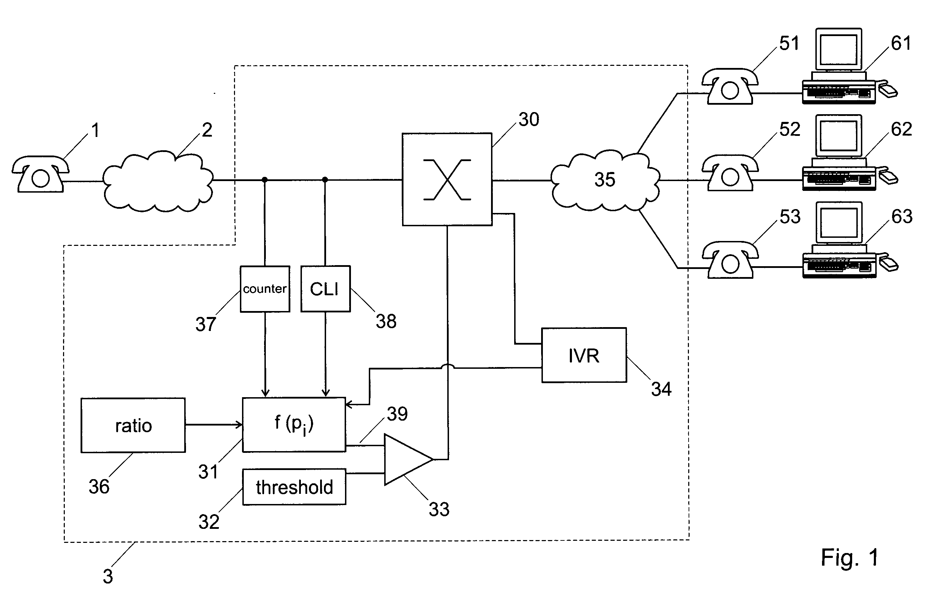

An automated communication system, which can be used in particular in a call center, is shown with reference number 3 on Figure 1. The system is connected to a telecommunication network 2, for example a telephone network, in order to be accessible by a plurality of callers 1 with phone terminals. A plurality of human call operators may be connected to the system with phone terminals 51, 52, 53 and/or computer terminals 61, 62, 63 for controlling the operation of the system and for handling incoming calls which cannot be automatically processed.

Without limiting the scope of the invention, the system 3 may be used for partially automated voice directory systems. In this case, most user requests will concern phone numbers or addresses that should be retrieved from requests indicating names, addresses and/or phone numbers. Other applications and services may use the system of the invention, including automated systems used for routing an inbound call to the right person within an organization or timetable information systems.

The system 3 comprises one or more IVR (interactive voice response) modules for handling automated tasks. The IVR module 34 is configured to perform certain functions depending on the application, such as for example recognition of speech elements and/or DTMF codes received from the caller, preparing appropriate responses and interactions with a dialogue manager, and text-to-speech conversion of those answers for speaking them to the caller with a selected voice. Other tasks, such as speaker identification and/or speaker authentication, may be performed by the IVR depending on the application.

In the illustrated embodiment, incoming calls in the system are directly routed to the IVR module 34 by a switch 30, for example a private branch exchange or a virtual switch. A second output of the switch 30 is directed to a local phone network 35, for example a voice over IP network or a more conventional telephony system, for connecting the incoming call to one of a plurality of operator terminals 51, 52, 53. The output to which each incoming communication is connected by the switch 30 is determined by a module comprising, in the illustrated embodiment, the parts 31, 32, 33, 36, 37, 38.

In this embodiment, the module used for determining when an incoming communication should be passed from the interactive voice response unit 34 over to one operator terminal 51-53 comprises a computing module 31 for computing a function f of several parameters pᵢ. A comparator 33 compares the score 39 computed by the module 31 with a predefined threshold 39 stored in a memory portion 32 and delivers a selection bit to the switch 30; the output selected by the switch depends on this selection bit. For example, the switch 33 will connect a given communication with the IVR as long as the score 39 computed by the module 31 for this communication is less than the threshold 32, and with the network 35 when this score reaches or exceeds the threshold, and when an operator is willing to take over the communication.

The score 39 computed by the module 31 depends on a plurality of parameters. In a simple embodiment, the score is a simple or ponderated addition of the different parameters pᵢ. More complex functions can be used to better reflect the importance of the different parameters.

According to the invention, the decision to pass an incoming communication from the IVR 34 over to a human operated terminal 51-53 depends at least partially on the cost incurred since the beginning of the communication, as computed by a counter 37. In an embodiment, the communication is switched as soon as the communication cost exceeds a predefined threshold. This has the advantage that the caller 1 knows exactly what he has to pay for having the right to speak with a human operator. In a preferred embodiment, the communication cost is only one among several parameters used by the module 31; in this case, other parameters or events may trigger a switch.

Different methods may be used by the counter 37 for computing the cost of a communication. In an embodiment, the counter only computes the part of the communication cost owed to the value-added service provider operating the system 3 for the use of the service. In the case of a system accessed via a business number, the communication cost sometimes comprises a first part owed to the telephone network operator and a second part owed to the service provider. The total cost may depend on the call duration only. In some systems, the first part also depends on the date and time, on the distance, on the type of subscription that has been contracted by the caller, on the type of equipment (fixed or mobile), etc., whereas the second part often depends only on the duration. The counter 37 may count only the second part, or both parts.

In another embodiment, the system 3 is run by the operator of the telephony network 2. In this case, a direct link may be established between the billing system of this operator and the counter 37. The cost used by the computing module 31 thus reflects precisely the cost that will be paid by the caller 1.

In yet another embodiment, the cost counter 37 estimates the communication cost incurred by the caller 1 from all the parameters he is able to determine, including the call duration, the location of the caller determined with a caller line identification system 38, the date and time, and/or billing tables used by the operator. Furthermore, the counter 37 may detect from the caller line identification number if the caller is a mobile or fixed subscriber, and adapt the time to switch to a human operator in consequence.

Other parameters used for computing the score 39 preferably include the identity of the caller, or the identification of his terminal, as determined by a caller line identification system 38 and/or by a voice-based speaker identification module in the IVR 34. This allows to give priority to some callers, for example VIPs, remote or mobile callers, frequent callers, or callers calling from a region where the language is different.

The parameters pi used for computing the score 39 may also include a cost/quality ratio 36 defined by the operator of the system 3, in order to adapt the time needed for switching incoming calls over to human operators as a function of business objectives. This ratio may be stored in a memory and changed at any time.

The score 39 preferably also depends on the number and availability of human operators in the call center, and/or on the number of concurrent calls. If the call center is overloaded, the intrusion of a human agent will occur less frequently, or at a later stage in the process. This allows the time needed to switch incoming calls to be adjusted to the current load of the call center.

Other parameters for determining if and when a call should be switched over to a human operator may be provided by the IVR module 34. In a preferred embodiment, the decision depends on:
■ The average or minimal confidence level reached by the speech recognition system in the IVR. A low confidence level may appear for example when the caller 1 has a strong accent, or when his/her voice does not belong to the training material that has been used for building the speech recognition models, and/or when the terminal used is of bad quality, and/or when there is noise or distortion in the communication channel.
■ Detection of inconsistencies in the dialogue flow. Typically, this situation occurs when a user is lost in the system or in a voice menu.
■ Detection that the user was unable to give a valid answer to a request. This happens when the caller is expected to give a valid answer, but is unable to get through even by spelling the name and/or after a second pass recognition.

When the score 39 computed by the module 33 reaches or exceeds the threshold 32, the comparator 33 thus delivers a selection bit to the switch 30. In an embodiment, the switch 30 immediately passes the incoming communication over to one of the human operators 51-53. This has the drawback, however, that the human operator must immediately take over the communication for the caller not to be surprised by the disappearance of his conversation partner; this implies always having at least one human operator just waiting for the next communication to be switched, or at least switching communication only when one operator is available.

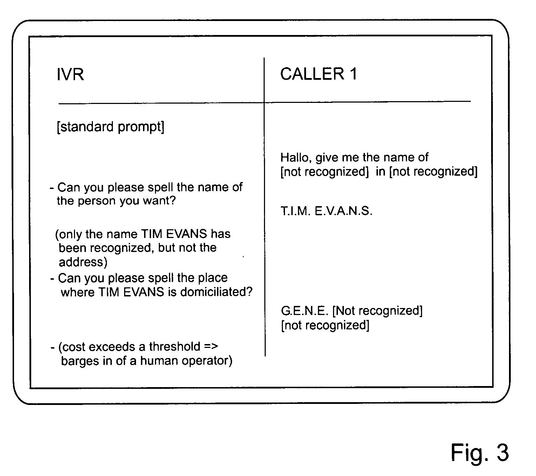

In a preferred embodiment, the operators of the call center are informed, for example by a sound signal and/or by a pop-up window displayed on the monitor of the terminal 61-63, that a communication is ready to be transferred. In this case, the resp. each operator can still decide if he actually wants to take over the incoming communication. The pop-up window displayed to the operator preferably summarizes the exact status of the communication, so that the operator does not need to ask questions again. An example of pop-up window which may be displayed to an operator is shown on Figure 3.

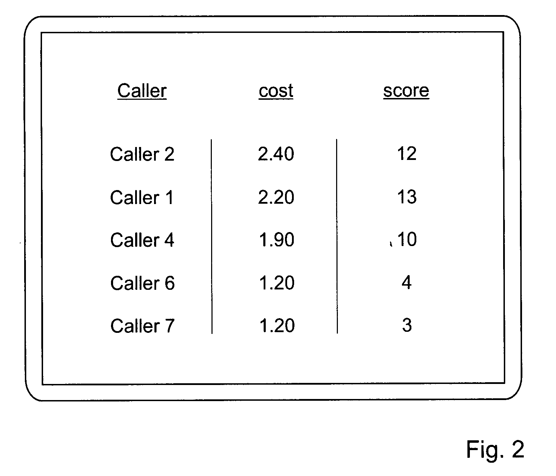

In yet another embodiment, a sorted list is presented to the resp. each operator of the call center, indicating for each call one or several scores. An example of such a list is shown on Figure 2, in which two scores are shown for each incoming call, the list being sorted in the decreasing order of the first score, which in the illustrated example corresponds to the communication cost. This list allows each operator to monitor at any moment the status of all the communications, and to interfere in selected communications, for example communications with the highest scores, by selecting the corresponding entry in the list.

Several options are possible for making an intrusion in an incoming communication:

As a first option, the human operator may decide to assist or correct the speech recognition system in the IVR 34, by entering in his computer terminal 61-63 a portion of speech the operator believes to have better recognized than the IVR. The text converted by the speech-to-text recognition system is preferably displayed to the operator who has the possibility of editing it in order to correct or improve the speech recognition, possibly by listening again to the relevant speech portion. In this case, the caller will not notice that a human agent has post-processed the automatic spoken dialogue.

In another option, the corporate voice used by the text-to-speech conversion system in the IVR is the same as the voice of one of the operators. In this case, this operator can seamlessly replace the IVR and take over the incoming communication, without disturbing the caller by a voice change. The drawback here is that the human operator with the voice selected by the IVR must be available and ready to take over the dialogue.

In yet another option, another operator uses a speech-to-text and text-to-speech system to take over the communication. The advantage is that the caller will not notice that a human operator has taken over the dialogue, and will not notice the voice change. The drawback of this method is that the intelligibility is decreased and that a delay is introduced.

In the simplest option, the operator uses his/her natural voice to barge in. In this case, the user may be disturbed by the voice change; however, the speech intelligibility will be optimal.

In a preferred embodiment, the communication is not completely passed from the interactive voice response system over to the human operated terminal. Rather, both systems concurrently access the recognized portions of speech in the stream of converted text. The system thus preferably includes a multi-threading system allowing both the human operator and the IVR system to modify the same variables, for example words or recognized portions of speech. Accesses to those variables is preferably synchronized in order to avoid simultaneous inconsequent change of a variable; each process preferably has its own logical stack and blocks the other's access to one variable during the short time needed for modifying this variable. This makes it possible to avoid a same word being simultaneously changed in two different ways by the human operator and by the IVR system.

This threading function has the advantage that, even after the communication has been passed over to a human operator, the interactive voice response system can still try to recognize portions of speech, or even improve in a second pass the recognition of previous portions, and thus assist the human operator. The task of the human operator may thus be simplified and, in the simplest case, resumed to the recognition of words the speech recognition system can not reliably recognize.

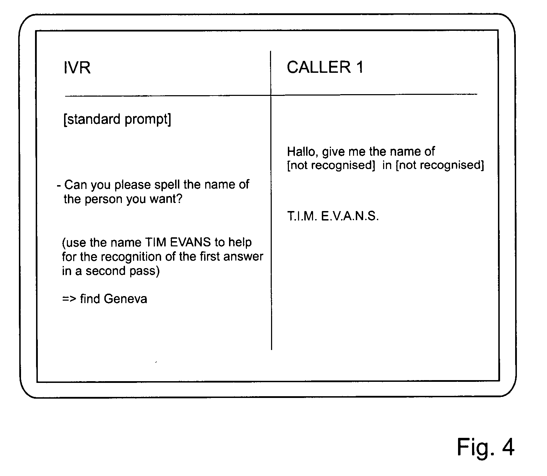

Figure 4 illustrates another example of dialogue, as it may be displayed to the operators. In this dialogue, the caller's first answer to the initial prompt of the IVR comprises a request for the phone number of a person; neither the name nor the address of the requested person is understood by the speech recognition system. The initial prompt of the IVR typically includes a very open question, such as "How can I help you?", to which the caller is likely to answer with several elements, or slots, for example a request including several names from a database.

The dialogue manager of the IVR system thus asks the caller to spell the name of the requested person. The caller spells the name. According to the invention, this recognized name is then used for assisting the speech recognition system in the recognition, during a second pass, of the caller's first answer. More precisely, the speech recognition system uses the recognized portion of speech corresponding to the spelled name TIM EVANS to force the grammar used for the recognition of the complete answer during a second pass of the recognition process. In many cases, forcing the grammar of a significant portion of a speech sequence substantially helps in the recognition of the other portions of the speech sequence; in the illustrated example, it is sufficient to request from the caller to spell the person's name for the speech recognition system to recognize the person's address, in this example Geneva.

One dialogue interaction can thus be recognized in a second pass using a grammar forced by portions of speech recognized during a subsequent dialogue interaction. Preferably, the speech recognition system can even uses names, or other portions of speech, recognized only by the human operator after his intrusion. Alternatively, the speech recognition system will retry the recognition of a dialogue interaction when one recognized portion, for example a name, of this interaction has been corrected by the human operator. This feature allows the human operator to enter only hard-to-recognize portions of dialogue interactions in his terminal; the IVR system will use those portions to improve and correct the recognition of other portions during a second pass.

## Claims

1. A method for determining when a human operator should make an intrusion in an incoming communication between a caller (1) and an interactive voice response system (34), said method comprising a step of determining the cost of said incoming communication, wherein the decision to make an intrusion depends on said cost.

2. The method of claim 1, further comprising a step of determining the confidence level reached by a speech recognition system in said interactive voice response system (34), wherein the decision to make an intrusion depends on whether said confidence level.

3. The method of one of the claims 1 to 2, further comprising a step of detecting inconsistencies in the dialogue between said caller (1) and said interactive voice response system (34), wherein the decision to make an intrusion depends on the detection of said inconsistencies.

4. The method of one of the claims 1 to 3, further comprising a step of detecting when the user is unable to give a valid answer to a request, wherein the decision to make an intrusion depends on the result of said detection.

5. The method of one of the claims 1 to 4, further comprising a step of detecting the number of human operators momentarily available, wherein the decision to make an intrusion depends on said number.

6. The method of one of the claims 1 to 5, wherein the decision to make an intrusion depends on the number of concurrent calls.

7. The method of one of the claims 1 to 6, further comprising a step of storing a requested quality/cost ratio (36), wherein the decision to make an intrusion depends on said ratio.

8. The method of one of the claims 1 to 7, wherein the decision to make an intrusion depends on the identity of said caller (1).

9. The method of one of the claims 1 to 8, wherein the decision to make an intrusion depends on the type of terminal used by said caller (1).

10. The method of one of the claims 2 to 9, wherein the decision to make an intrusion depends on a score (39) computed as a function of a plurality of parameters (pᵢ).

11. The method of one of the claims 1 to 10, further comprising a step where a human operator post-processes an automatic spoken dialogue portion.

12. The method of one of the claims 1 to 11, wherein said interactive voice response unit (34) synthesizes answers using the same voice as said human operator.

13. The method of one of the claims 1 to 12, comprising a step of converting the voice of said human operator to text and then back to speech so as to use the same voice as the voice synthesized by said interactive voice response unit (34).

14. The method of one of the claims 1 to 13, wherein said human operator barges in on said interactive voice response system (34) when said decision has been taken.

15. The method of one of the claims 1 to 13, further comprising a step where said human operator and said interactive voice response system (34) concurrently access the same stream of recognized text in a multi-threading process.

16. The method of one of the claims 1 to 15, further comprising a step of displaying to at least one human operator the progress of each said communication, thus allowing the human operator to decide if he wants to interfere in the communication.

17. The method of one of the claims 1 to 16, further comprising a step of displaying to at least one human operator a list of said communication sorted by a score (39) indicating the need for human processing of the call.

18. The method of one of the claims 1 to 17, comprising a plurality of dialogue interactions between the caller and said interactive voice response system, wherein the recognition of one portion of speech in one said dialogue interaction is used for helping in the recognition of a previous dialogue interaction.

19. The method of claim 18, wherein the recognition of one portion of speech is used to force the grammar used for the recognition of a previous dialogue interaction during a second pass of the recognition process.

20. The method of one of the claims 18 to 19, further comprising a step where at least one portion of speech in one said dialogue interaction is recognized by a human operator, wherein the recognition of said portion of speech by said human operator is used for helping in the recognition by said interactive voice response system (34) of a previous dialogue interaction.

21. Speech recognition method for recognizing a plurality of dialogue interactions between a caller and an interactive voice response system (34), wherein the recognition of one portion of speech in one said dialogue interaction is used for helping in the recognition of a previous dialogue interaction.

22. The method of claim 21, wherein the recognition of one portion of speech is used to force the grammar used for the recognition of a previous dialogue interaction during a second pass of the recognition process.

23. The method of one of the claims 21 to 22, further comprising a step where at least one portion of speech in one said dialogue interaction is recognized by a human operator, wherein the recognition of said portion of speech by said human operator is used for helping in the recognition by said interactive voice response system of a previous dialogue interaction.

24. Speech recognition method for converting to text a speech portion, comprising a step where a human operator and an interactive voice response system (34) concurrently access the same stream of recognized text in a multi-threading process.

25. Automated communication system, in particular for call centers, comprising:
an interactive voice response unit (34) for servicing incoming communications,
one or several terminals (51-53, 61-63) for human operators,
computing means (31, 32, 33) for deciding when one said human operator should make an intrusion in one said incoming communication,
**characterized by** a communication cost counter (37) for determining the cost of each said incoming communication,
and in that said computing means (31, 32, 33) take said cost into account for deciding whether a human operator should make an intrusion in said communication.

26. The system of claim 25, wherein said interactive voice response unit comprises a confidence level detector, and wherein said computing means (31, 32, 33) take said confidence level into account for deciding whether a human operator should make an intrusion in said communication.

27. The system of one of the claims 25 to 26, further comprising at least one computer terminal for allowing said human operator to visualize and/or post-process the automatic spoken dialogue.

28. Computer program product comprising a program for executing the method of one of the claims 1 to 24 when a computer runs said program.
